(19) Europäisches Patentamt
European Patent Office
Office européen des brevets

(11) Veröffentlichungsnummer: 0 358 020
A2

(12) **EUROPÄISCHE PATENTANMELDUNG**

(21) Anmeldenummer: 89115325.6

(22) Anmeldetag: 19.08.89

(51) Int. Cl.5: C08G 73/14 , C08G 18/34 , C08G 18/38

(30) Priorität: 03.09.88 DE 3829959

(43) Veröffentlichungstag der Anmeldung: 14.03.90 Patentblatt 90/11

(84) Benannte Vertragsstaaten: DE FR GB IT

(71) Anmelder: BAYER AG

D-5090 Leverkusen 1 Bayerwerk(DE)

(72) Erfinder: Zecher, Wilfried, Dr.
Treptower Strasse 6
D-5090 Leverkusen 1(DE)
Erfinder: Dhein, Rolf, Dr.
Deswatinesstrasse 30
D-4150 Krefeld(DE)
Erfinder: El-Sayed, Aziz, Dr.
Saarlauterner Strasse 39
D-5090 Leverkusen 1(DE)
Erfinder: Haese, Wilfried, Dr.
Hauweg 32
D-4050 Mönchengladbach 1(DE)

(54) **Herstellung von Polyamidimiden.**

(57) Die Erfindung betrifft ein Verfahren zur Herstellung von Polyamidimiden aus Diimiddicarbonsäuren, Trimellitimidocarbonsäuren und Diisocyanaten und deren Verwendung als Formkörper, Folien und Bindemittel für Lacke.

EP 0 358 020 A2

## Herstellung von Polyamidimiden

Die Erfindung betrifft ein Verfahren zur Herstellung von Polyamidimiden aus Diimiddicarbonsäuren, Trimellitimidocarbonsäuren und Diisocyanaten und deren Verwendung als Formkörper, Folien und Bindemittel für Lacke.

Es ist bekannt, daß aliphatisch-aromatische Polyamidimide durch Umsetzung von Polyisocyanaten mit cyclischen Polycarbonsäureanhydriden und Lactamen (DE-AS 1770202) oder Polyamiden (DE-AS 1956512) hergestellt werden können Diese Polyamidimide besitzen besondere Eigenschaften wie hohe Erweichungstemperaturen und gute Elastizitätswerte und können als hochtemperaturbeständige Beschichtungen, z.B. auf dem Elektroisolierlack-Sektor, oder als Thermoplaste Verwendung finden. Es ist weiterhin bekannt, daß aliphatisch-aromatische Polyamidimide durch Kondensation von Polyisocyanaten mit Trimellitimidocarbonsäuren erhalten werden (Makromol. Chem. 183, 557 u. 571, 1982).

In den DE-AS 1720909 und 2441020 wird die Herstellung von Polyamidimiden aus Diimiddicarbonsäuren und Diisocyanaten beschrieben. Nach JP-0S 56136813 werden aus Trimellitimidocarbonsäuren, Polycarbonsaureanhydriden, trisfunktionellen Isocyanato-iso-cyanuraten und Diisocyanaten Polymere erhalten, die als Bindemittel für Lacke Verwendung finden.

Es wurde nun gefunden, daß man Polyamidimide mit ausgezeichneten Eigenschaften erhält, wenn aliphatische, aliphatisch-aromatische oder aromatische Diisocyanate mit 5 - 95 Mol.-%, bezogen auf die Summe der Dicarbonsäuren, Trimellitimidocarbonsäuren der Formel (I)

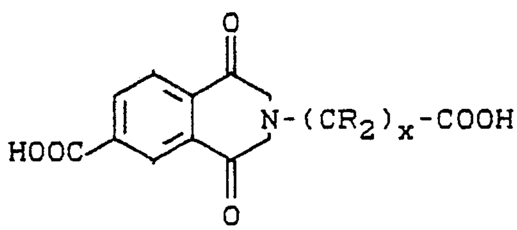

(I),

in welcher

R unabhängig voneinander für Wasserstoff (H), $C_1$-$C_6$-Alkyl steht,

x für die Zahl 1, 2, 3, 4, 5, 6, 7, 8, 9, 10, 11 oder 12 steht

und 95 - 5 Mol.-%, bezogen auf die Summe der Dicarbonsäuren, Diimiddicarbonsäuren der Formel (II)

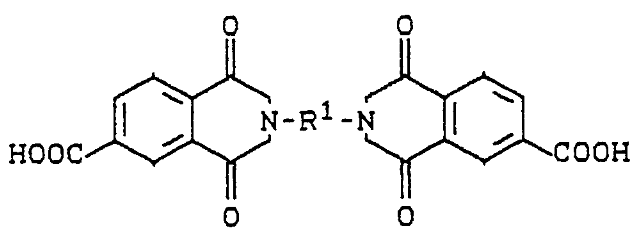

(II),

in welcher

$R_1$ einen aliphatischen, aliphatisch-aromatischen oder aromatischen Rest bedeutet,

gegebenenfalls in einem Lösungsmittel und gegebenenfalls in Gegenwart eines Katalysators, bei Temperaturen von bis 400° C, vorzugsweise von 70 bis 350° C, zur Umsetzung gebracht werden.

Anstelle der Diimidodicarbonsäuren können auch die stöchiometrischen Mengen an Diisocyanaten und Trimellitsäureanhydrid eingesetzt werden.

Die erfindungsgemäßen Polyamidimide zeichnen sich durch gute mechanische Werte wie hohe Wärmeformbeständigkeit, Zähigkeit und gutes Fließverhalten bei der Verarbeitung aus. Diese Eigenschaften sind als überraschend anzusehen, da bei der Umsetzung von Trimellitimidocarbonsäuren mit Diisocyanaten gemäß Literaturangaben in erheblichem Umfange Neben- und Vernetzungsreaktionen auftreten (Makromol. Chem 183, 557 u. 571, 1982). Die Umsetzung von Diimidodicarbonsäuren führt zu Reaktionsprodukten, die nur noch nach Verfahren der Pulverpreß-Technologie verarbeitet werden können (DE-AS 2441020). Reaktionsprodukte gemäß JP-0S 56136813 führen zu stark vernetzten Polyamidimid-Systemen, die als Thermoplaste nicht verwendbar sind.

Die für die erfindungsgemäße Reaktion verwendbaren Trimellitimidocarbonsäuren sind z.B. aus Trimellitsäureanhydrid und den Lactamen oder Aminocarbonsäuren nach bekannten Verfahren zugänglich. Sie können getrennt oder "in situ" durch Erhitzen von Trimellitsäureanhydrid mit einem Lactam und nachfolgende Zugabe der übrigen Komponenten hergestellt werden. Die Trimellitimidocapronsäuren entsprechen der Formel (I)

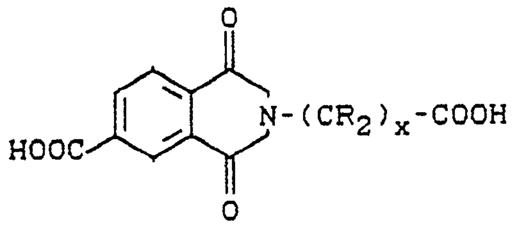

(I),

in welcher
R unabhängig voneinander für Wasserstoff (H), Alkyl mit 1 bis 6 C-Atomen steht,
x für die Zahl 1, 2, 3, 4, 5, 6, 7, 8, 9, 10, 11, 12 steht.

Bevorzugt entspricht x den Zahlen 3, 5, 10 und 11.

Besonders bevorzugt wird Trimellitimidocapronsäure (x = 5) verwendet.

Die Herstellung der erfindungsgemaßen Diimidodicarbonsäuren erfolgt nach bekannten Verfahren wie z.B. der Kondensation entsprechender Diamine oder Diisocyanate mit Trimellitsäureanhydrid und kann getrennt oder "in situ" erfolgen.

Erfindungsgemäße Diimidodicarbonsäuren sind z.B. Verbindungen der Formel (II)

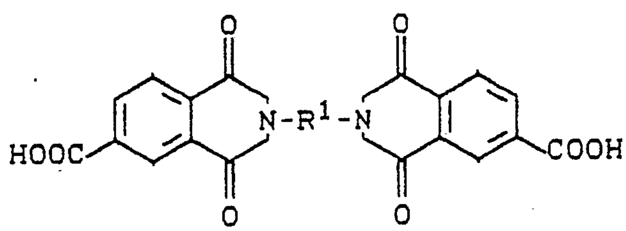

(II),

in der

$R^1$ für einen, gegebenenfalls mit Halogen (z.B. Fl, Cl, Br), Alkyl-und/oder Arylgruppen substituierten aliphatischen Rest mit 1 bis 20 C-Atomen, einen aromatischen Rest mit 5 bis 12 C-Atomen, einen cycloaliphatischen Rest mit 5 bis 13 C-Atomen, einen aliphatisch-aromatischen Rest mit 6 bis 20 C-Atomen und einem bis zu drei Heteroatome wie N, O oder S enthaltenden cyclischen Rest, der aromatisch oder aliphatisch sein kann und 5 bis 12 Ringatome hat,
steht.

Bevorzugt sind in Formel (II) aliphatische Reste $R^1$ mit 2 bis 12 C-Atomen wie Hexamethylen, Trimethylhexamethylen, von Isophoren abgeleitete Reste, cycloaliphatische Reste mit 6 bis 15 C-Atomen wie Biscyclohexylmethylen, Arylenreste wie Phenylen, Tolylen und von Diphenylmethan und Diphenylethern abgeleitete Reste. Besonders bevorzugt werden die Reste von $4,4'$-und $2,4'$-Diphenylmethan, 2,4-und 2,6-Toluol und deren Gemische.

Nach einer weiteren Ausführungsform können für die erfindungsgemäße Reaktion auch anstelle der Diimidodicarbonsäuren Diamine (III) oder Diisocyanate (IV) der Formeln
$H_2N\text{-}R^1\text{-}NH_2$ (III) und
$OCN\text{-}R^1\text{-}NCO$ (IV),
in denen
$R^1$ die bei Formel (II) angegebene Bedeutung hat,
zusammen mit der stöchiometrischen Menge Trimellitsäureanhydrid eingesetzt werden.

Die Kondensation zu den Diimidodicarbonsäuren kann, insbesondere bei Verwendung der Diisocyanate, gleichzeitig mit der übrigen Reaktion ausgeführt werden. Nach einer bevorzugten Ausführungsform werden zuerst die Diamine (III) oder Diisocyanate (IV) mit Trimellitsäureanhydrid umgesetzt und dann die weitere Reaktion durchgeführt.

Als Isocyanate für die erfindungsgemäße Umsetzung können Diisocyanate eingesetzt werden, wie sie z.B. in der Deutschen Patentanmeldung 3204129.2 beschrieben werden. Vorzugsweise eignen sich Diisocyanate der Formel (V)

$R^2$-(-NCO)$_2$ (V),

in der

$R^2$ ein gegebenenfalls mit Halogen, Alkyl- und/oder Arylgruppen substituierter aliphatischer Rest mit 1 bis 20 C-Atomen, ein aromatischer Rest mit 5 bis 12 C-Atomen, ein cycloaliphatischer Rest mit 5 bis 13 C-Atomen, ein aliphatisch-aromatischer Rest mit 6 bis 20 C-Atomen und ein bis zu drei Heteroatome wie N, O oder S enthaltender cyclischer Rest, der aromatisch oder aliphatisch sein kann und 5 bis 12 Ringatome hat, ist.

Besonders bevorzugt sind in Formel (V) aliphatische Reste mit 2 bis 12 C-Atomen, Arylreste wie Phenylen, Tolylen, von Diphenylmethan, Diphenylether abgeleitete Reste.

Bevorzugt verwendet werden technisch leicht zugängliche Gemische aus 2,4- und 2,6-Toluylendiisocyanaten, m-Phenylendiisocyanat sowie phosgenierte Kondensate aus Anilin und Formaldehyd mit Polyphenylen-methylen-struktur und symmetrische Verbindungen wie 4,4′-Diisocyanatediphenylmethan, 4,4′-Diisocyanato-diphenylether, Napthylen-(1,5)-diisocyanat, p-Phenylendiisocyanat, 4,4′-Diisocyanatediphenyl-dimethylmethan, analoge hydroaromatische Diisocyanate wie 4,4′-Diisocyanatodicyclohexylmethan sowie aliphatische Diisocyanate mit 2 bis 12 C-Atomen wie Hexymethylendiisocyanat, Trimethylhexymethylendiisocyanat, von Isophoron abgeleitete Diisocyanate usw..

Besonders bevorzugt werden 4,4′- und 2,4′-Diisocyanatodiphenylmethan, 2,4- und 2,6-Toluylendiisocyanat, technische Gemische aus 2,4- und 2,6-Toluylendiisocyanat und deren Mischungen verwendet.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam, Pyrrolidon oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder z.B. auch die Polycarbodiimide aus den beschriebenen Polyisocyanaten usw..

Zur Regulierung des Molekulargewichts können auch monofunktionelle Isocyanate wie z.B. Phenylisocyanat, Tolylisocyanat, Cyclohexylisocyanat, Stearylisocyanat, β,β,β,-Trifluorethylisocyanat und 3,5-Bistrifluormethyl-phenylisocyanat oder die entsprechenden Amine eingesetzt werden

Weiterhin können zur Regulierung des Molekulargewichts unter den Reaktionsbedingungen monofunktionell reagierende Carbonsäuren wie z.B. Phthalsäure oder deren Anhydrid, Benzoesäure, Palmitinsäure und N-Phenyl- oder N-Dodecyl-trimellitimidsäure eingesetzt werden, die auch mit $C_1$-$C_6$-Alkyl oder Halogen (z.B. Fluor, Chlor) substituiert sein können.

Die Herstellung der erfindungsgemäß verwendbaren Polyamidimide kann in Lösungsmitteln erfolgen, wie dies in DE-AS 1770202 beschrieben wird Bevorzugt werden als Lösungsmittel Phenole wie Phenol und technische Gemische aus o-, m- und p-Kresolen verwendet, weiterhin Lactame wie Caprolactam oder N-Methylcaprolactam, Tetramethylensulfon, Säureamide wie Dimethylacetamid und Dimethylformamid und Harnstoffe wie Tetramethylharnstoff, N-N′-Dimethyl-ethylen- und -propylenharnstoff usw.. Besonders bevorzugt wird als Lösungsmittel N-Methylpyrrolidon eingesetzt.

Zur Herstellung der erfindungsgemäß verwendbaren Polyamidimide werden die Reaktionskomponenten mit oder ohne Lösungsmittel einige Minuten bis zu mehreren Stunden bei Temperaturen von 70 bis 350 °C gehalten. Der Verlauf der Reaktion läßt sich beispielsweise über die Gasentwicklung, den Anstieg der Viskosität und die IR-Spektren verfolgen.

Eine bevorzugte Ausführungsform besteht darin, die Trimellitimidocarbonsäuren und Diimidodicarbonsäuren in einem Lösungsmittel vorzulegen, das Disocyanat in Substanz oder in Lösung im Verlaufe von 1 bis 10 Stunden, vorzugsweise von 2 - 6 Stunden bei Temperaturen von 80 bis 200 °C, vorzugsweise von 110 bis 150 °C einzutragen und dann die Reaktion bei Temperaturen von 120 bis 230 °C weiterzuführen.

Eine bevorzugte Variante dieser Ausführungsform besteht darin, bei Temperaturen von 80 - 200 °C, vorzugsweise von 110 - 150 °C, im Verlaufe von 1 - 10 Stunden 90 - 100 %, vorzugsweise 95 - 99 % der stöchiometrischen Menge des Diisocyanats einzutragen, bei Temperaturen von 120 -230 °C weiterzukondendsieren, dann bei 80 - 200 °C weitere 1 - 12 %, vorzugsweise 2 - 7 % der stöchiometrischen Menge des Diisocyanats anteilweise einzutragen und dann die Kondensation bei 120 - 230 °C zu Ende zu führen.

Das Reaktionsgemisch kann bereits im Kessel zu einer noch fließfähigen Schmelze aufkonzentriert und dann weiter kondensiert werden. Eine bevorzugte Ausführungsform besteht darin, den restlichen Konzentrationsvorgang, gegebenenfalls unter Nachkondensation, in einem Eindampfextruder, gegebenenfalls unter Vakuum, bei Temperaturen von 240 -400 °C, vorzugsweise von 280 -350 °C, auszuführen. Eine weitere

bevorzugte Ausführungsform besteht darin, das Reaktionsprodukt durch Fällung oder Extraktion zu isolieren und gegebenenfalls in einem Extruder oder durch Festphasenkondensation auszukondensieren.

Die Reaktion kann kontinuierlich und diskontinuierlich ausgeführt werden.

Als besonders geeignet haben sich erfindungsgemäße Polyamidimide mit einer relativen Viskosität, gemessen an einer 1 %igen Lösung in Kresol bei 25 °C, von 1,5 -3,0, vorzugsweise von 1,7 - 2,6 mPas, erwiesen.

Im allgemeinen werden pro Val Carbonsäure aus der Summe der Trimellitimidocarbonsäuren und der Diimiddicarbonsäuren 1 Val Isocyanat eingesetzt, doch sind auch weitgehende Abweichungen von diesen stöchiometrischen Verhältnissen möglich. In einigen Fällen hat sich ein Überschuß von 0,5 - 6 %, vorzugsweise von oft 1 - 3 %. Isocyanat pro Val Säure und bei Verwendung von Trimellitsäureanhydrid zusätzlich pro Val Säureanhydrid, als vorteilhaft erwiesen.

Bei Verwendung von Trimellitsäureanhydrid anstelle der Diimidodicarbonsäuren oder von weiteren Dicarbonsäuren werden pro Val Säureanhydrid-Gruppe und pro Val Säure-Gruppe jeweils 1 Val Isocyanat eingesetzt.

Eine bevorzugte Ausführungsform besteht darin, zuerst pro Val Säureanhydrid ein Val Isocyanat einzusetzen, bei Temperaturen vorzugsweise von 60 - 140 °C die Komponenten umzusetzen und dann unter den beschriebenen stöchiometrischen und Reaktions-Bedingungen die weitere Umsetzung durchzuführen.

Das Mengenverhältnis der erfindungsgemäßen Imidcarbonsäuren kann zwischen 95 und 5 Mol.-% Trimellitimidocarbonsäure (I) und ergänzend zwischen 5 und 95 Mol.-% Diimidocarbonsäure liegen. Zusätzlich zu den erfindungsgemäßen Imidcarbonsäuren können aliphatische Dicarbonsäuren wie Adipinsäure, Azelainsäure, Sebazinsäure, aromatische Dicarbonsäuren wie vorzugsweise Isophthalsäure, Terephthalsäure usw. verwendet werden.

Die Herstellung der erfindungsgemäßen Polymeren kann durch Katalysatoren beeinflußt werden, z.B. durch ba sische Katalysatoren wie Amine, z.B. Triethylamin, Dimethylbenzylamin, 1,4-Diazabicyclo-(2,2,2)-octan, 2-Methylimidazol und Pyridin, durch anorganische und organische Metallverbindungen wie Verbindungen des Eisens, Bleis, Zinks, Zinns, Kupfers, Kobalts, Nickels und Titans, z.B. Kobaltacetat, Bleioxid, Dibutylzinnlaurat, Kupferacetylacetonat, Nickelacetat, Alkaliphenolate und Natriumcyamid, durch Borverbindungen wie Borsäure, durch Phosphorverbindungen wie Trialkylphosphin, Methylphospholinoxid, Triphenylphosphit, Triphenylphosphat, Polyphosphorsäure usw..

Die erfindungsgemäßen Polyamidimide können als Bindemittel für Beschichtungen verwendet werden. Sie können nach Verfahren der Pulverpreßtechnologie und nach Spritzguß-und Extrusionsverfahren zu Formteilen und Folien verarbeitet werden.

Die erfindungsgemäßen Polymere zeichnen sich durch besondere Zugfestigkeit, E-Moduli und Wärmeformbeständigkeit aus. Ihre Eigenschaften können für die verschiedenen Anwendungsgebiete, z.B. als Thermoplaste, durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern, z.B. von Phenolen wie Dodecylphenol und Lactamen wie Dodecanlactam und weiteren Polymeren variiert werden.

## Beispiel 1

In 1200 g N-Methylpyrrolidon werden 218 g 4,4′-Bis-trimellitimidodiphenylmethan, 482 g Trimellitimidocapronsäure und 14,36 g N-Dodecyltrimellitsäureimid vorgelegt. Dann wird bei 130 °C eine Lösung von 500 g 4,4′-Diisocyanatodiphenylmethan in 360 g N-Methylpyrrolidon im Verlaufe von 3 Stunden zugetropft. Die Kondensation erfolgt unter Abspaltung von Kohlendioxid. Anschließend wird noch 1 Stunde bei 130 °C und jeweils 2 Stunden bei 150, 170 und 190 °C gerührt. Man erhält das Polyamidimid als klare hellbraune Lösung in N-Methylpyrrolidon mit einem Festgehalt von 40 Gew.-% und einer relativen Viskosität $\eta^{25}$ = 1,52, gemessen an einer 1%igen Lösung in N-Methyl-pyrollidon. Das IR-Spektrum zeigt die für Imide charakteristischen Banden bei 1715 und 1785 $cm^{-1}$.

50 g der so hergestellten Polyamidimid-Lösung werden im Stickstoffstrom in jeweils einer Stunde bei 250 und 300 °C eingedampft. Man erhält das Polyamidimid als schmelzbares, klares und elastisches Harz mit einer relativen Viskosität $\eta^{25}$ = 1,95, gemessen an einer 1%igen Lösung in m-Kresol bei 25 °C.

Eine weitere Probe der Polyamidimid-Lösung wird in Methanol gefällt. Man erhält das Polyamidimid als gelbes faseriges Pulver mit einer Glastemperatur Tg = 197 °C und einer relativen Viskosität $\eta^{25}$ = 1,98, gemessen in m-Kresol.

Beispiel 2

In 282 g N-Methylpyrrolidon werden 25,0 g 4,4′-Diisocyanatodiphenylmethan und 38,4 g Trimellitsäureanhydrid 4 Stunden bei 80 °C und 2 Stunden bei 100 °C gerührt. Dann werden 120,2 g Trimellitimidocapronsäure und 4,31 g N-Dodecyltrimellitsäureimid eingetragen und bei 130 °C im Verlaufe von 3 Stunden die Lösung von 126,5g 4,4′-Diisocyanatodiphenylmethan in 110 g N-Methylpyrrolidon zugetropft. Anschließend wird noch eine Stunde bei 130 °C und jeweils 2 Stunden bei 150, 170 und 190 °C gerührt. Das Reaktionsprodukt ist eine braune Lösung mit einem Festgehalt von 40 Gew.-%, die mit 95 g N-Methylpyrrolidon verdünnt und in Methanol gefällt wird. Man erhält das Polyamidimid als gelbes Pulver mit der Glastemperatur Tg = 189 °C und der relativen Viskosität $\eta^{25}$ = 1,54, gemessen an einer 1%igen Lösung in m-Kresol.

Eine Probe des Polyamidimid-Pulvers wird in Kresol gelöst, auf eine Glasplatte aufgestrichen und in jeweils 15 Minuten bei 200 und 300 °C zu einer klaren elastischen Folie eingebrannt.

Beispiel 3

In 2465 g N-Methylpyrrolidon werden 491,4 g 4,4′-Bis-trimellitimidodiphenylmethan, 1084 g Trimellitimidocapronsäure und 32,2 g N-Dodecyltrimellitsäureimid vorgelegt. Dann werden bei 130 °C 78,3 g eines technischen Gemisches aus 80 % 2,4- und 20 % 2,6 Toluylendiisocyanat und anschließend 1001 g 4,4′-Diisocyanatodiphenylmethan in 950 g N-Methylpyrrolidon im Verlaufe von 4 Stunden zugetropft. Danach wird noch eine Stunde bei 130 °C und jeweils 2 Stunden bei 150 und 170 °C gerührt.

Anschließend wird auf 130 °C abgekühlt und bei dieser Temperatur im Verlauf von 1 Stunde 22,5 g 4,4′-Diisocyanatodiphenylmethan in 50 g N-Methylpyrrolidon zugetropft. Dann wird noch eine Stunde bei 130 °C und jeweils 2 Stunden bei 150, 170 und 190 °C gerührt. Das Reaktionsprodukt ist eine braune Lösung mit einem Festgehalt von 40 Gew.-% und einer Viskosität von $\eta^{25}$ 156000 mPas.

Eine Probe der Polyamidimid-Lösung wird im Stickstoffstrom bei 250 und 300 °C eingedampft. Man erhält das Polyamidimid als schmelzbares, klares und elastisches Harz mit der relativen Viskosität $\eta^{25}$ = 1,92, gemessen an einer 1%gen Lösung in m-Kresol.

Eine weitere Probe der Polyamidimid-Lösung wird mit 3 Gew.-%, bezogen auf den Festgehalt, eines technischen Gemisches von p-Dodecylphenolen versetzt. Dann wird im Stickstoffstrom bei 250 und 300 °C eingedampft. Man erhält das Polyamidimid als schmelzbares elastisches Harz mit einer relativen Viskosität $\eta^{25}$ = 1,74, gemessen an einer 1%gen Lösung in m-Kresol.

Die restliche Polyamidimid-Lösung wird mit 828 g N-Methylpyrrolidon versetzt und in Methanol gefällt. Man erhält das Polyamidimid als fasriges gelbes Pulver mit der relativen Viskosität $\eta^{25}$ = 1,71, gemessen an einer 1%igen Lösung in m-Kresol.

Eine Probe des Polyamidimid-Pulvers wird bei 250 °C und 200 bar zu einer klaren elastischen Scheibe verpreßt. Die Glastemperatur beträgt Tg = 199 °C.

Beispiel 4

In 350 g N-Methylpyrrolidon werden 94,1 g Trimellitsäureanhydrid, 7,18 g N-Dodecyltrimellitsäureimid, 112,5 g 4,4′-Diisocyanatodiphenylmethan und 8,7 g eines technischen Gemisches aus 80 % 2,4- und 20 % 2,6-Toluylendiisocyanat eingetragen. Dann wird 4 Stunden bei 80 °C, 4 Stunden bei 120 °C und jeweils 2 Stunden bei 130, 150 und 170 °C gerührt. Die Kondensation erfolgt unter Abspaltung von Kohlendioxid. Man erhält das Polyamidimid als klare braune Lösung mit einem Festgehalt von 40 Gew-% und einer relativen Viskosität $\eta^{25}$ = 1,55, gemessen an einer 1%igen Lösung in N-Methylpyrrolidon bei 25 °C. Das IR-Spektrum zeigt bei 1715 und 1790 $cm^{-1}$ für Imide charakteristische Banden.

Eine Probe des Harzes wird auf eine Glasplatte auf gestrichen und in jeweils 15 Minuten bei 200 und 300 °C zu einem klaren elastischen Lackfilm eingebrannt.

Beispiel 5

In 220 g N-Methylpyrrolidon werden 103,8 g Trimellitimidocapronsäure, 28,8 g Trimellitsäureanhydrid und 7,18 g N-Dodecyltrimellitsäureimid vorgelegt. Dann wird bei 130 °C im Verlaufe von 2 Stunden eine Lösung von 112,5 g 4,4′-Diisocyanatodiphenylmethan und 8,4 g Hexamethylendiisocyanat in 100 g N-Methylpyrolidon zugetropft. Anschließend wird noch jeweils 2 Stunden bei 130, 150, 170 und 190 °C gerührt.

Anschließend werden unter Vakuum 245 g Lösungsmittel abdestilliert und danach noch 4 Stunden bei 200 °C und 4 Stunden bei 220 °C geführt. Man erhält beim Erkalten das Polyamidimid als klares, sprödes Harz mit einem Festgehalt von ca. 75 Gew.-% und einer relativen Viskosität $\eta^{25}$ = 1,50, gemessen an einer 1%igen Lösung in N-Methylpyrrolidon.

Eine Probe des Harzes wird im Stickstoffstrom bei 250 und 300 °C eingedampft. Das Polyamidimid wird als noch schmelzbares, klares Harz mit einer relativen Viskosität $\eta^{25}$ = 1,90, gemessen an einer 1%igen Lösung in m-Kresol, erhalten.

Beispiel 6

In die Lösung von 47,0 g 2,4-Bis-trimellitimido-toluol, 120,5 g Trimellitimidocapronsäure und 3,59 g N-Dodecyltrimellitsäureimid in 288 g N-Methylpyrrolidon werden bei 130 °C im Verlaufe von 2 Stunden 125 g 4,4-Diisocyanatodiphenylmethan in 90 g N-Methylpyrrolidon eingetropft. Danach wird noch eine Stunde bei 130 °C und jeweils 2 Stunden bei 150, 170 und 190 °C gerührt. Man erhält eine Lösung des Polyamidimids mit einem Festgehalt von 40 Gew.-%.

Eine Probe der Polyamidimid-Lösung wird in Methanol gefällt. Man erhält ein gelbes Pulver mit einer Glastemperatur von Tg = 197 °C und einer relativen Viskosität $\eta^{25}$ = 1,60, gemessen an einer 1%igen Lösung in m-Kresol.

Eine weitere Probe der Polyamidimid-Lösung wird mit Dimethylacetamid verdünnt, auf eine Glasplatte aufgestrichen und in jeweils 15 Min. bei 200 und 300 °C zu einem klaren elastischen Lackfilm eingebrannt.

Eine weitere Probe der Polyamidimid-Lösung wird im Stickstoffstrom bei 250 und 310 °C eingedampft. Man erhält das Polymere als schmelzbares elastisches Harz mit einer relativen Viskosität $\eta^{25}$ = 1,85, gemessen an einer 1%igen Lösung in m-Kresol.

Beispiel 7

In 290 g N-Methylpyrrolidon werden 54,6 g 4,4′-Bis-trimellitimidodiphenylmethan, 122,0 g Trimellitimidocapronsäure und 3,59 g N-Dodecyltrimellitsäureimid vorgelegt. Dann wird bei 130 °C im Verlaufe von 2 Stunden eine Lösung von 10,44 g eines technischen Gemisches aus 80 % 2,4- und 20% 2,6-Toluylendiisocyanat, 110,0g 4,4′-Diisocyanatodiphenylmethan und 1,19 g Phenylisocyanat in 90 g N-Methylpyrrolidon zugetropft. Danach wird noch eine Stunde bei 130 °C und jeweils 2 Stunden bei 150 und 170 °C gerührt. Anschließend werden 12,8 g eines Gemisches technischer Nonylphenole zugegeben und nochmals 2 Stunden bei 190 °C gerührt. Das Polyamidimid wird als Lösung mit einem Festgehalt von ca 40 Gew.-% und einer relativen Viskosität $\eta^{25}$ = 1,50, gemessen in N-Methylpyrrolidon, erhalten.

Eine Probe der Polyamidimid-Lösung wird im Stickstoffstrom bei 250 und 300 °C eingedampft. Man erhält das Polyamidimid als schmelzbares und klares elastisches Harz mit einer relativen Viskosität $\eta^{25}$ = 1,76, gemessen an einer 1%igen Lösung in m-Kresol.

Beispiel 8

In 390 g Caprolactam werden 54,6g 4,4′-Bis-trimellitdiphenylmethan und 122 g Trimellitimidocapronsäure vorgelegt. Dann werden bei 170 °C im Verlaufe von 2 Stunden anteilweise 123,8 g 4,4′-Diisocyanatodiphenylmethan und 2,11 g Dodecylisocyanat eingetragen. Anschließend wird noch 1 Stunde bei 170 °C und jeweils 2 Stunden bei 190 und 200 °C nachgerührt. Das Reaktionsprodukt erstarrt beim Erkalten zu einem Harz, das mit Methanol extrahiert wird.

Man erhält das Polyamidimid als gelbes Pulver mit einer relativen Viskosität $\eta^{25}$ = 1,55, gemessen an einer 1%igen Lösung in m-Kresol.

Eine Probe des Polyamidimid-Pulvers wird in einem technischen Kresolgemisch gelöst, auf ein Blech aufgestrichen und in jeweils 15 Minuten bei 200 und 300 °C zu einem klaren elastischen Lackfilm eingebrannt.

Eine weitere Probe des Polyamidimid-Pulvers wird bei 220 °C und 200 bar zu einer transparenten Scheibe verpreßt. Die Glastemperatur beträgt Tg = 176 °C.

Beispiel 9

In 3150 g N-Methylpyrrolidon werden 672 g Trimellitsäureanhydrid und 437,5 g 4,4′-Diisocyanatodiphenylmethan eingetragen. Dann wird jeweils 2 Stdn. bei 80, 90 und 100 °C gerührt. Die Kondensation erfolgt unter Abspaltung von Kohlendioxid. Anschließend werden 1313 g Trimellitimidoundecansäure eingetragen und dann eine Lösung von 1313 g 4,4′-Diisocyanatodiphenylmethan in 1400 g N-Methylpyrrolidon bei 130 °C im Verlaufe von 4 Stdn. zugetropft. Danach wird noch eine Stde. bei 130 °C gerührt, 16,66 g Phenylisocyanat in 100 g N-Methylpyrrolidon zugetropft und nochmals 1 Stde. bei dieser Temperatur gerührt. Anschließend wird die Kondensation in jeweils 2 Stdn. bei 150 °, 170 ° und 190 °C zu Ende geführt. Das Reaktionsgemisch wird mit 1060 g N-Methylpyrrolidon verdünnt. Man erhält das Polyamidimid als braune viskose Lösung mit einem Festgehalt von 35 Gew.-% und einer relativen Viskosität $\eta^{25}{}_{rel}$ = 1,57, gemessen an einer 1 %igen Lösung in N-Methylpyrrolidon bei 25 °C.

Eine Probe der so hergestellten Polyamidimid-Lösung wird in Stickstofform zu jeweils einer Stunde bei 250 und 300 °C eingedampft. Man erhält das Polyamidimid als klares elastisches Harz mit einer relativen Viskosität $\eta^{25}$ = 1,93, gemessen an einer 1 %igen Lösung in m-Kresol, und einer Glastemperatur Tg = 190 °C.

Aus einer Probe der gemäß Beispiel hergestellten Lösung wird das Polyamidimid gefällt, indem mit N-Methylpyrro lidon auf einen Festgehalt von 20 Gew.-% verdünnt wird, pro 100 g dieser Lösung 25 g Methanol zugetropft werden und dann in Methanol eingetropft wird. Das Fällungsprodukt wird mit Methanol vermahlen und nochmals extrahiert. Man erhält das Polyamidimid als hellgelbes Pulver mit einer relativen Viskosität $\eta^{25}$ = 1,82, gemessen an einer 1 %igen Lösung in m-Kresol.

Beispiel 10

In 3600 g N-Methylpyrrolidon werden 1229 g Trimellitsäureanhydrid und 880 g 4,4′-Diisocyanatodiphenylmethan eingetragen. Dann wird jeweils 2 Stdn. bei 80, 90 und 100 °C gerührt. Anschließend werden 488 g Trimellitimidocapronsäure eingetragen und dann eine Lösung von 1140 g 4,4′-Diisocyanatodiphenylmethan in 880 g N-Methylpyrrolidon bei 130 °C im Verlaufe von 4 Stdn. zugetropft. Danach wird jeweils eine Stde. bei 130 und 150 °C gerührt und dann eine Lösung von 19 g Phenylisocyanat in 96 g N-Methylpyrrolidon zugetropft. Anschließend wird, während Stickstoff übergeleitet wird, noch eine Stde. bei 150 °C und jeweils 2 Stdn. bei 170 und 190 °C gerührt. Dann werden in das Reaktionsgemisch 1120 g N-Methylpyrrolidon eingetragen. Man erhält das Polyamidimid als viskose Lösung mit einem Festgehalt von 35 Gew.-% und einer relativen Viskosität $\eta^{25}$ = 1,79, gemessen an einer 1 %igen Lösung in N-Methylpyrrolidon. Eine Probe dieser Lösung wird mit N-Methylpyrrolidon auf einen Festgehalt von 20 Gew.-% verdünnt, pro 100 g Lösung mit 25 g Methanol verrührt und in Methanol eingetropft. Das Fällungsprodukt wird gemahlen, extrahiert und getrocknet. Man erhält das Polyamidimid als gelbes Pulver mit einer Glastemperatur Tg = 247 °C und einer relativen Viskosität $\eta^{25}$ = 1,94, gemessen an einer 1 %igen Lösung in m-Kresol.

**Ansprüche**

1. Verfahren zur Herstellung von Polyamidimiden, dadurch gekennzeichnet, daß organische Diisocyanate mit 95 bis 5 Mol.-% einer Imidocarbonsäure (I) der Formel

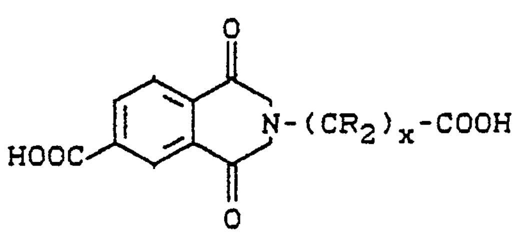

(I),

in welcher
R unabhängig voneinander für Wasserstoff (H), $C_1$-$C_6$-Alkyl steht,
x für die Zahl 1, 2, 3, 4, 5, 6, 7, 8, 9, 10, 11 oder 12 steht und

5 - 95 Mol.-% einer Diimiddicarbonsäure der Formel (II)

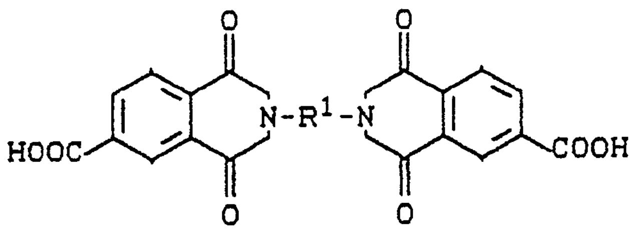

(II),

in welcher
$R^1$ einen aliphatischen, aliphatisch-aromatischen oder aromatischen Rest bedeutet, bei Temperaturen von 50 bis 400° C, vorzugsweise von 70 bis 350° C, ggf. in einem Lösungsmittel und ggf. in Gegenwart eines Katalysators zur Umsetzung gebracht werden.

2. Verfahren nach Anspruch 1, dadurch gekennzeichnet, daß anstelle der Diimiddicarbonsäure (II) die stöchiometrische Menge Trimellitsäureanhydrid und eines Diamins (III) der Formel
$H_2$-N-$R^1$-$NH_2$ (III),
in welcher
$R^1$ die in Anspruch 1 angegebene Bedeutung hat,
eingesetzt werden.

3. Verfahren nach Anspruch 1, dadurch gekennzeichnet, daß anstelle der Diimidodicarbonsäure (II) die stöchiometrische Menge Trimellitsäureanhydrid und eines Diisocyanats der Formel (IV)
OCN-$R^1$-NCO (IV),
in welcher
$R^1$ die in Anspruch 1 angegebene Bedeutung hat, eingesetzt werden.

4. Verfahren nach Anspruch 1, dadurch gekennzeichnet, daß die Imidcarbonsäuren (I) und (II) in einem Lösungsmittel vorgelegt werden und das Diisocyanat im Verlaufe von 1 bis 10 Stunden bei 80 bis 200° C anteilweise eingetragen wird.

5. Verfahren nach Anspruch 1, dadurch gekennzeichnet, daß bei Verwendung von Trimellitsäureanhydrid ein Val Säureanhydrid mit einem Val Isocyanat bei Temperaturen von 60 - 140° C gegebenenfalls in einem Lösungsmittel und gegebenenfalls in Gegenwart eines Katalysators zur Umsetzung gebracht wird, dann die Trimellitimidocarbonsäure 1 zugegeben wird und das restliche Diisocyanat im Verlaufe von 1 -10 Stunden bei Temperaturen von 80 - 200° C anteilweise eingetragen wird.

6. Verfahren nach Anspruch 1, dadurch gekennzeichnet, daß in der Formel (I) für die Imidocarbonsäuren x die Zahlen 5 (ω-Trimellitimidocapronsäure), 10 oder 11 bedeutet.

7. Verfahren nach Anspruch 1, dadurch gekennzeichnet, daß in Formel (II) für die Diimidocarbonsäuren $R^1$ die zweifach substituierten Reste von 4,4′- und 2,4′-Diphenylmethan und 2,4- und 2,6-Toluol und deren Mischungen, und 1,6-disubstituiertes Hexan bedeutet

8. Verfahren nach Anspruch 1, dadurch gekennzeichnet, daß als Diisocyanate 4,4′- und 2,4′-Diisocyanatodiphenylmethan, 2,4- und 2,6-Toluylendiisocyanat, technische Gemische aus 2,4- und 2,6-Toluylendiisocyant und deren Mischungen verwendet werden.

9. Verfahren nach Anspruch 1, dadurch gekennzeichnet, daß die Herstellung des Polyamidimids in einem Lösungsmittel erfolgt, gegebenenfalls bereits auf dieser Stufe zu einer noch fließfähigen Lösung aufkonzentriert wird und der restliche Konzentrationsvorgang, gegebenenfalls unter Nachkondensation, in einem Eindampfextruder bei Temperaturen von 240 bis 400° C durchgeführt wird.

10. Verfahren nach Anspruch 1, dadurch gekennzeichnet, daß das Polyamidimid in einem Lösungsmittel hergestellt wird, durch Fällung oder Extraktion aufkonzentriert wird und gegebenenfalls in einem Extruder oder in der Testphase nachkondensiert wird.

11. Verwendung der nach Anspruch 1 hergestellten Polyamidimide als Bindemittel für Lacke und zur Verformung nach Verfahren der Pulverpreß-Technologie, nach Spritguß-Verfahren und Extrusionsverfahren.